# EUROPEAN PATENT SPECIFICATION

(11) **EP 4 223 428 B1**
(45) Date of publication and mention of the grant of the patent: **05.06.2024**
(21) Application number: 23150262.6
(22) Date of filing: 04.01.2023
(51) Int. Cl.: B08B 7/00, B08B 17/04, H01M 4/88, B41J 29/17, B41J 11/00, H01M 4/04

(54) **ELECTRODE FORMING APPARATUS AND MULTILAYER SEPARATOR FORMING APPARATUS**
ELEKTRODENHERSTELLUNGSVORRICHTUNG UND VORRICHTUNG ZUR HERSTELLUNG EINES MEHRSCHICHTIGEN SEPARATORS
APPAREIL DE FORMATION D'ÉLECTRODE ET APPAREIL DE FORMATION DE SÉPARATEUR MULTICOUCHE

(30) Priority: 01.02.2022 JP 2022014295; 01.02.2022 JP 2022014268
(43) Date of publication of application: 09.08.2023
(73) Proprietor: Ricoh Company, Ltd., Tokyo 143-8555 (JP)
(72) Inventor: UCHIDA, Kohichi, Tokyo, 143-8555 (JP); KATOH, Yasuhisa, Tokyo, 143-8555 (JP); HASHIMOTO, Yasushi, Toyko, 143-8555 (JP); FUNADA, Kohei, Toyko, 143-8555 (JP); AIZAWA, Satoshi, Tokyo, 143-8555 (JP); SHIBASAKI, Hidehisa, Tokyo, 143-8555 (JP)
(74) Representative: J A Kemp LLP

(56) References cited:
- WO-A1-2013/115225
- JP-A- H11 254 657
- JP-A- 2012 071 242
- US-A1- 2005 078 145
- US-A1- 2020 247 147

## Description

### BACKGROUND

### Technical Field

Embodiments of the present invention relate to an electrode forming apparatus and a multilayer separator forming apparatus.

### Related Art

Conventionally, electrodes used for electrochemical elements including a power storage device such as a battery, a power generation device such as a fuel cell, and a solar power generation device are formed by dispersing a powdery active substance or a catalyst composition in a liquid, and applying, fixing, and drying the liquid on an electrode substrate. For the application of the liquid, a spray, a dispenser, a die coater, upward coating, and printing using an inkjet head have been used.

Japanese Unexamined Patent Application Publication No. 2006-264172 discloses a technique by which after a liquid is applied, the liquid adhering to a conveyance surface at the time of idle discharging is caused to fly by electrostatic force to remove the liquid with a liquid removal member.

However, according to the conventional technique, it is unrealistic to cause the liquid to fly by electrostatic force if the amount of adhesion is large as in the case of borderless printing in which not only the front surface but also the side surfaces of the electrode substrate are printed.

WO 2013/115225 A1 discloses a device and method for manufacturing an electrode of a battery. US 2020/247147 A1 discloses an inkjet card printer having an ink overspray collector.

### SUMMARY

The present invention has been made in view of the above, and an object of the present invention is to print without adhering liquid to a conveyance surface with a small and simple device at the time of non-edge printing in which not only the front surface but also the side surfaces of an electrode substrate are printed. Another object of the present invention is to enable accurate installation of a liquid adherence member used for the above-described printing.

The invention is defined by the appended claims.

According to embodiments of the present invention, printing can be performed without adhering liquid to a conveyance surface at the time of borderless printing in which not only the front surface but also the side surfaces of an electrode substrate are printed, and a liquid adherence member used for the above-described printing can be accurately installed with a small and simple device.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram schematically illustrating an electrode printing apparatus according to a first embodiment;
FIG. 2 is a side view of an ink removing mechanism that is disposed in the electrode printing apparatus;
FIG. 3 is a plan view of the ink removing mechanism disposed in the electrode printing apparatus;
FIG. 4 is a front view of a cross section of the ink removing mechanism disposed in the electrode printing apparatus as viewed from a downstream side in a conveyance direction;
FIG. 5 is a diagram illustrating a positional relationship between an electrode substrate and a liquid adherence member;
FIG. 6 is a diagram illustrating a configuration of a tape sticking apparatus;
FIG. 7A is a diagram illustrating a positional relationship among main components of the tape sticking apparatus;
FIG. 7B is a diagram illustrating the positional relationship among the main components of the tape sticking apparatus;
FIG. 8 is a diagram illustrating a tape front end restraining process;
FIG. 9 is a diagram illustrating a tape front end cutoff process;
FIG. 10 is a diagram illustrating a tape front end pressure-sticking process;
FIG. 11 is a diagram illustrating a position of a tape rear end at the time of attaching the tape around the entire circumference;
FIG. 12 is a diagram illustrating a tape rear end cutting process;
FIG. 13 is a diagram illustrating a tape joint sticking process;
FIG. 14 is a plan view of an ink removing mechanism disposed in an electrode printing apparatus according to a second embodiment;
FIG. 15 is a front view of a cross section of the ink removing mechanism disposed in the electrode printing apparatus as viewed from a downstream side in a conveyance direction; and
FIG. 16 is a diagram schematically illustrating an electrode forming apparatus according to a third embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, a sticking apparatus, a liquid discharge apparatus, an electrode forming apparatus, a multilayer separator forming apparatus, and a sticking method will be described in detail with reference to the accompanying drawings.

### First Embodiment

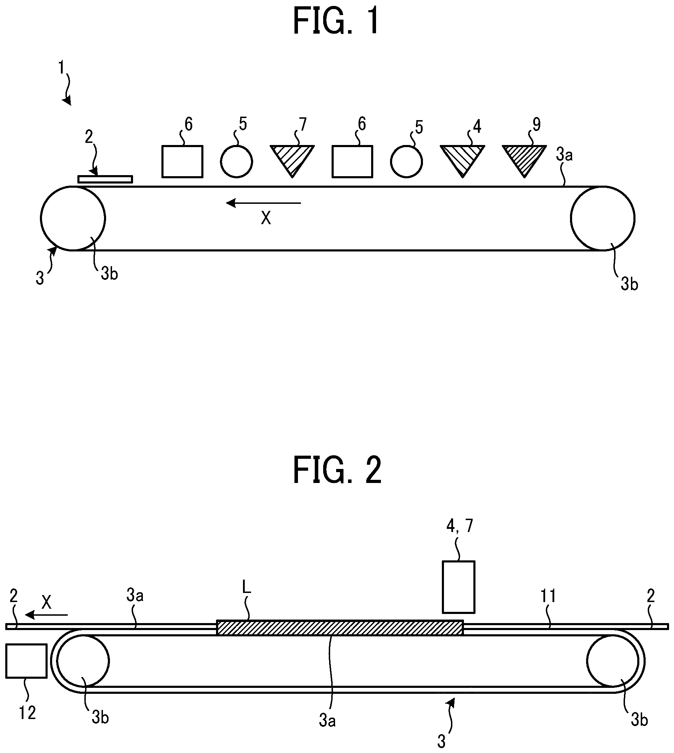

FIG. 1 is a diagram schematically illustrating an electrode printing apparatus 1 according to a first embodiment.

As illustrated in FIG. 1, the electrode printing apparatus 1 is a liquid discharge apparatus that uses liquid ink as functional layer production ink to form a functional layer in a position-selective manner on at least one of a surface of an electrode substrate as a substrate (hereinafter, also referred to as "electrode substrate surface") and a surface of an active material layer (hereinafter, also referred to as an "active material layer surface"). In other words, the electrode printing apparatus 1 forms the functional layer in a position-selective manner on at least one of the electrode substrate surface and the active material layer surface using the liquid ink.

In the present specification and claims, the functional layer is a layer that exhibits a function in at least one of manufacture and use of an electrochemical element. For example, when at least one of an insulating resin layer and an inorganic layer is disposed on the electrode active material, the functional layer functions as an insulating layer.

In the embodiments described below, the functional layer is disposed on the electrode substrate. However, the present invention may be a multilayer separator forming apparatus in which a separator formed of a resin such as polypropylene or a nonwoven fabric is a substrate instead of the electrode substrate, or may be a multilayer separator forming apparatus in which a multilayer separator provided with a layer different from the separator on the separator is a substrate.

As illustrated in FIG. 1, the electrode printing apparatus 1 includes a conveyance mechanism 3 as a conveyor that conveys at least one of an electrode substrate 2 as a substrate and an electrode having an active material layer on the electrode substrate 2. In the electrode printing apparatus 1, an image recognition device 9, a liquid discharge head 4, a light source 5, a heater 6, a liquid discharge head 7, a light source 5, a heater 6, and the like are arranged in this order from the upstream side to the downstream side in a conveyance direction X of the electrode substrate 2 by the conveyance mechanism 3.

The electrode substrate 2 is, for example, a current collector which is a metal component for extracting electric power from the electrode body in a battery case to the outside of the battery case. Alternatively, the electrode substrate 2 is, for example, an electrode element including a current collector and an active material layer formed on the current collector.

The electrode substrate 2 is flat conductive foil, and can be suitably used for a secondary battery which is generally a power storage device, a capacitor, particularly a lithium ion secondary battery. As the conductive foil, aluminum foil, copper foil, stainless foil, titanium foil, etched foil obtained by etching such foil to form fine holes, a perforated electrode substrate used for a lithium ion capacitor, or the like is used.

The electrode substrate 2 may be a carbon paper fiber-like electrode used in a power generation device such as a fuel cell in a nonwoven or woven planar form, or may be a perforated electrode substrate with fine holes.

The image recognition device 9 is arranged on the most upstream side in the conveyance direction X, and functions as an information acquisition unit that acquires defect information and positional information on the surface of the active material layer formed on the electrode substrate 2. The image recognition device 9 includes a camera, a line sensor, or the like, for example. The image recognition device 9 is used when the active material layer already exists on the electrode substrate 2, and recognizes and records the position of an active material image and the position of a defect on the electrode substrate 2. Therefore, the image recognition device 9 is not an essential component, and is provided as necessary.

The conveyance mechanism 3 conveys the electrode substrate 2 so that the electrode substrate 2 sequentially passes through the front surfaces of the liquid discharge head 4, the light source 5, and the heater 6. The conveyance mechanism 3 can be configured by, for example, a belt that moves the electrode substrate 2, a combination of an air floating mechanism or a roller, a drive mechanism including a motor that drives the air floating mechanism or the roller. The conveyance mechanism 3 may further be provided with a guide member or the like that assists the movement of the electrode substrate 2.

The liquid discharge head 4 functions as a liquid discharge head for forming an ink layer that discharges liquid ink (liquid composition), which is ink for producing at least one of a resin layer and an inorganic layer, onto the electrode substrate 2 to form an ink layer. The liquid discharge head 4 discharges liquid ink onto the electrode substrate 2 in accordance with an image signal related to information for forming a frame pattern as an ink layer pattern to be described later and, if necessary, defect information acquired by the image recognition device 9 to form an ink layer that is a precursor state of at least one of the resin layer and the inorganic layer. The liquid discharge head 4 may be a head arranged in a line having a width equal to or larger than the width in the width direction orthogonal to the conveyance direction X of the electrode substrate 2. The pressure generator and the driving method for discharging the liquid ink from the liquid discharge head 4 are not particularly limited. For example, a thermal actuator that causes liquid ink droplets to fly using the pressure of vapor generated by the heat of the heating element, a piezoelectric actuator that causes liquid ink droplets to fly using a mechanical pressure pulse generated by a piezoelectric element, or an electrostatic actuator including a diaphragm and a counter electrode may be used. Otherwise, the pressure on the liquid ink supply system may be turned on or off to fly the liquid ink droplets as necessary.

The light source 5 has a curing function of irradiating the ink layer on the electrode substrate 2 with light to cure the ink layer into a resin layer. The light source 5 may be, for example, a mercury lamp such as a low-, medium-, or high-pressure mercury lamp, a tungsten lamp, an arc lamp, an excimer lamp, an excimer laser, a semiconductor laser, a high-power ultra violet liquid crystal diode (UV-LED), a yttrium aluminum garnet (YAG) laser, a laser system combining a laser and a nonlinear optical crystal, a radio-frequency induced ultraviolet generation device, an electron beam irradiation device such as an electron beam (EB) cure, an X-ray irradiation device, or the like. Among them, from the viewpoint of simplifying the system, it is preferable to use a high-frequency induction ultraviolet generation device, a high/low-pressure mercury lamp, a semiconductor laser, or the like. The light source 5 may be provided with a condensing mirror or a running and drawing optical system.

The heater 6 has a function as a curing/drying unit or a heating unit/heating mechanism that heats the ink layer formed by discharging ink for producing an inorganic layer on the electrode substrate 2 to accelerate curing or dry the ink layer. The heater 6 may be, for example, an infrared lamp, a roller (heat roller) incorporating a heating element, a blower that blows warm air or hot air, a furnace into which boiler-type hot air using water vapor or the like is introduced, or the like.

When an active material layer is formed on the electrode substrate 2 on which the resin layer was provided earlier, the liquid discharge head 7 functions as an application unit for further applying an active material as necessary. Instead of the liquid discharge head 7, a die head having an intermittent function, a high-speed dispenser, a jet nozzle, a spray nozzle, or the same liquid discharge head as described above may be used to apply the ink for producing an active material layer.

In this case, the liquid discharge head 7 functions as a liquid discharge head for producing an active material layer that discharges ink (liquid composition) for producing an active material layer containing an active material onto the surface of the electrode substrate 2 to form an active material layer. The liquid discharge head 7 is appropriately provided as necessary, and also functions as an application unit that applies ink for producing at least one of the resin layer and the inorganic layer to a defect site or the like on the surface of the active material layer based on the defect information acquired by the image recognition device 9.

As described above, the liquid discharge head 7 may function as a liquid discharge head for forming an ink layer similar to the liquid discharge head 4 that discharges liquid ink, which is ink for producing at least one of a resin layer and an inorganic layer, onto the electrode substrate 2 to form an ink layer.

The electrode printing apparatus 1 is equipped with a control device that controls operations of the conveyance mechanism 3, the image recognition device 9, the liquid discharge head 4, the light source 5, the heater 6, the liquid discharge head 7, the light source 5, the heater 6, and the like.

Next, the operations of the electrode printing apparatus 1 will be described.

First, the control device of the electrode printing apparatus 1 conveys the electrode substrate 2 in the conveyance direction X from the right side to the left side in FIG. 1 by driving the conveyance mechanism 3. The conveying speed of the electrode substrate 2 at this time is within a range of 0.1 m/min to several 100 m/min, for example.

When the image recognition device 9 is disposed upstream of the electrode printing apparatus 1, the control device of the electrode printing apparatus 1 observes the electrode surface by the image recognition device 9, performs reading with a camera or a line sensor that records position information of the defect site, recognizes the defect site and the position thereof, and performs feedback to the subsequent liquid ink discharge and printing by the liquid discharge head 4.

When the electrode substrate 2 is conveyed to the front of the liquid discharge head 4, the control device of the electrode printing apparatus 1 controls the liquid discharge head 4 in accordance with an image signal to discharge the liquid ink. Accordingly, an ink layer is formed on the electrode substrate 2.

Next, the control device of the electrode printing apparatus 1 conveys the electrode substrate 2 with the ink layer thereon to the front of the light source 5. When the electrode substrate 2 passes through the front of the light source 5, the control device of the electrode printing apparatus 1 drives the light source 5 to irradiate the ink layer on the electrode substrate 2 with light to cure the ink layer. The intensity of irradiation light at the position on the surface of the ink layer varies depending on the wavelength of the light source used and the like, but is usually within a range of several mW/cm² to 1 KW/cm². The amount of exposure to the ink layer can be appropriately set according to the sensitivity of the liquid ink, the moving speed of the surface to be printed (conveying speed of the electrode substrate 2), and the like.

Subsequently, the control device of the electrode printing apparatus 1 conveys the electrode substrate 2 carrying the cured ink layer to the inside of the heater 6 or the vicinity thereof. When the electrode substrate 2 passes through the heater 6 or the vicinity thereof, the control device of the electrode printing apparatus 1 drives the heater 6 to heat the ink layer on the electrode substrate 2, and dries the solvent contained in the ink layer to form an insulating layer. In order to sufficiently heat the ink layer to remove the solvent in the ink layer, the capabilities of the heater 6 are determined depending on the speed of the conveyance mechanism 3, the boiling point of the solvent, and the like. Therefore, the heater 6 performs heating such that the highest attainment temperature is usually a relatively high temperature of about 200°C or less, preferably about 80°C to 200°C, or about 60°C to 180 °C, for example, and the drying time is, although depending on the thickness of the ink layer, usually about 0.5 minutes to 60 minutes, more preferably 1 minute to 10 minutes. Cross-linking reaction during main heating may be promoted. In this case, in the electrode printing apparatus 1 illustrated in FIG. 1, the time of heating by the heater 6 is usually as relatively short as about several seconds to several 10 seconds. Therefore, when the curing of the ink layer is almost completely advanced by the heater 6, heating is performed so that the highest attainment temperature is a relatively high temperature of about 200°C or less, preferably about 80°C to 200°C, or about 60°C to 180°C, for example.

Subsequently, when the active material layer is not yet formed on the electrode substrate 2, the control device of the electrode printing apparatus 1 discharges the ink for producing an active material layer onto the surface of the electrode substrate 2 by the liquid discharge head 7 or the like to form the active material layer, and dries the active material layer by the heater 6. In order to sufficiently heat the active material layer to remove the solvent in the active material, the capabilities of the heater 6 are determined depending on the speed of the conveyance mechanism 3, the boiling point of the solvent, and the like. Therefore, the heater 6 performs heating such that the highest attainment temperature is usually a relatively high temperature of about 200°C or less, preferably about 80°C to 200°C, or about 60°C to 180 °C, for example, and the drying time is, although depending on the thickness of the active material layer, usually about 0.5 minutes to 60 minutes, more preferably 1 minute to 10 minutes.

Thereafter, the control device of the electrode printing apparatus 1 winds up the electrode substrate 2 if the electrode substrate 2 has a band shape, or conveys the electrode substrate 2 to a stocker (container for storing a thin film electrode). Accordingly, the electrode printing is completed.

The heating unit for heating the ink layer may be any unit that is generally known as a heat source and is controllable. However, using the light source 5 that can generate infrared light in addition to visible light, for example, makes it possible to heat the ink layer simultaneously with light irradiation. In this case, curing can be promoted, which is more preferable.

When the ink layer is irradiated with light, the ink layer is heated by the heat generated from the light source 5. Thus the heating unit may not necessarily be provided as an independent member unlike the heater 6. However, it takes a long time to completely cure the ink layer by leaving it at room temperature under heat from the light source 5 alone. Therefore, it is desired that leaving an ink layer at room temperature is applied to an application in which a sufficiently long time can be secured until complete curing. For example, a printed matter such as a newspaper advertisement distributed the next day can ensure a time long enough for curing such as one day and one night, and thus can be completely cured even when being left at room temperature.

Examples of such a light source include LightHammer^{®} series (manufactured by Fusion UV Systems, Inc.^{®}) and the like. In addition, high-luminance UV-LEDs, laser diodes, and the like of 1 W or more from LED manufacturers represented by Nichia Corporation are on the market, and they can be suitably used by arranging them on a line or a plane. In a case where light hardly reaches due to penetration into the gaps in the active material powder, an electron beam or X-ray irradiation device can be used as a light source. For example, a small EB irradiation device manufactured by Iwasaki Electric Co., Ltd. or the like is suitably used.

The electrode printing apparatus 1 that is an apparatus discharging liquid ink according to the present embodiment can be provided with two or more liquid discharge heads that discharge different types of liquid ink (for example, liquid ink layers of a resin layer and an inorganic layer), for application to multi-layer simultaneous printing and liquid ink mixing at a landing point.

In the electrode printing apparatus 1 described above, in order to relatively move the electrode substrate 2 with respect to the liquid discharge head 4, 7, or the like, the electrode substrate 2 is moved by the conveyance mechanism 3 that conveys the electrode substrate 2 to form at least one of a resin layer and an inorganic layer with a desired thickness. However, the liquid discharge head 4 or the like may be moved in the conveyance direction X as necessary. Alternatively, both the electrode substrate 2 and the liquid discharge head 4 or 7 may be moved.

Furthermore, appropriately using the technology described in the present embodiment makes it possible to perform overprinting and form at least one of a resin layer pattern and an inorganic layer pattern with a relatively large thickness. That is, it is also possible to form at least one of a resin layer and an inorganic layer with a thickness of several tens µm or more by repeating a plurality of times the discharge of the liquid ink in a predetermined region of the electrode substrate body and the curing of the resultant ink layer.

When the electrode active material layer is formed on the electrode substrate 2 and the resin layer or the inorganic layer is formed using the liquid discharge head 4 or 7, the control device of the electrode printing apparatus 1 feeds back the defect of the obtained electrode active material layer using the image recognition device 9, and changes the concentration, thickness, or liquid type of the liquid discharged by the liquid discharge head 4 or 7, thereby curing the defect of the electrode active material layer when patterning the active material, the resin layer, the inorganic layer, and the inorganic layer.

The thin film electrode according to the present embodiment typically has a thickness of 1 mm or less, more preferably 500 µm or less. The lower limit of the thickness is not particularly specified, but is about 1 µm from the limit of current foil production technology. Realizing and providing a thin film electrode with the above-described thickness that exhibits the above-described and later-described effects makes it possible to contribute to miniaturization with high performance and lighter weight for various devices (in particular, lithium ion secondary batteries).

In the electrode printing apparatus 1, when liquids (liquid compositions) are discharged from the liquid discharge heads 4 and 7, which are dischargers, to form an ink layer or an active material layer on the electrode substrate 2, borderless printing is executed in which the ink is discharged beyond the ends of the electrode substrate 2 in the width direction orthogonal to the conveyance direction X of the electrode substrate 2. Here, the borderless printing in the present embodiment means printing not only the surface of the electrode substrate 2 but also the side surface of the electrode substrate 2, and is generally different from general borderless printing in which printing is performed on the entire surface. When the borderless printing is performed as described above, there is a disadvantage that the belt or the like constituting the conveyance mechanism 3 is stained with the ink discharged outside the electrode substrate 2.

Therefore, in the electrode printing apparatus 1 according to the present embodiment, the ink discharged outside the electrode substrate 2 is removed by the ink removing mechanism. This point will be described below.

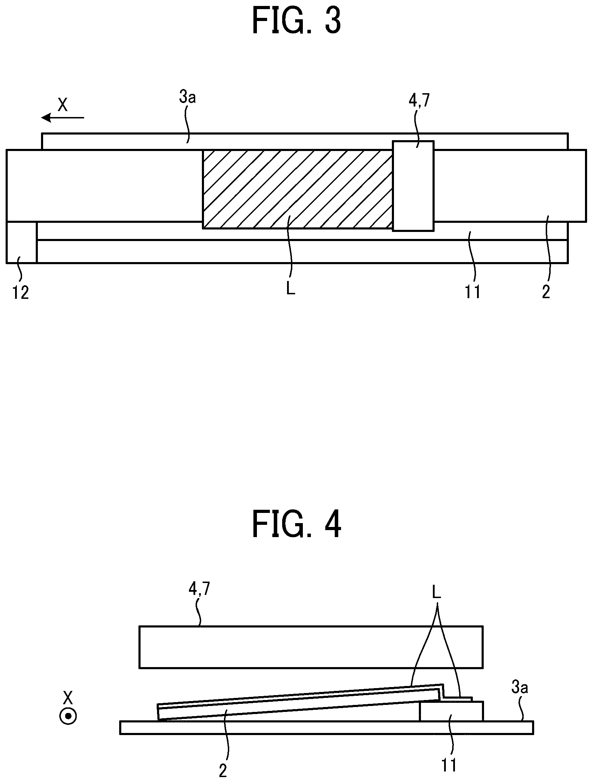

FIG. 2 is a side view of the ink removing mechanism disposed in the electrode printing apparatus 1, FIG. 3 is a plan view of the ink removing mechanism disposed in the electrode printing apparatus 1, and FIG. 4 is a front view of a cross section of the ink removing mechanism disposed in the electrode printing apparatus 1 as viewed from the downstream side in the conveyance direction.

As illustrated in FIGS. 2 to 4, the ink removing mechanism includes a liquid adherence member 11 that is disposed on the belt 3a constituting the conveyance mechanism 3 and adheres the liquid L ejected from the liquid discharge heads 4 and 7, and a liquid removing member 12 that is a removing unit that removes the liquid L on the liquid adherence member 11.

The liquid adherence member 11 has an elongated tape shape, and is disposed so as to cover a region on the belt 3a constituting the conveyance mechanism 3 and around one side end (a position where the liquid L is discharged to the outside of the electrode substrate 2) in a direction parallel to the conveyance surface of the electrode substrate 2 and orthogonal to the conveyance direction X. Therefore, a portion of the liquid adherence member 11 is held between the end of the electrode substrate 2 and the belt 3a constituting the conveyance mechanism 3. As a result, the electrode substrate 2 is inclined with respect to the conveyance surface of the belt 3a on which to convey the electrode substrate 2.

The liquid adherence member 11 is formed of a non-permeable material, for example. The term "non-permeable" refers to a characteristic that the liquid L does not permeate the inside of the liquid adherence member 11 and the liquid L does not flow to the back side of the liquid adherence member 11. Specifically, the liquid adherence member 11 is formed of a synthetic resin such as a fluororesin, a polytetrafluoroethylene (PTFE) resin, a polyethylene terephthalate (PET) resin, or a polyimide film, for example. As described above, since the liquid adherence member 11 is formed of a non-permeable material, the liquid L discharged outside the electrode substrate 2 does not permeate the liquid adherence member 11, so that the conveyance surface of the electrode substrate 2 in the belt 3a constituting the conveyance mechanism 3 is not contaminated.

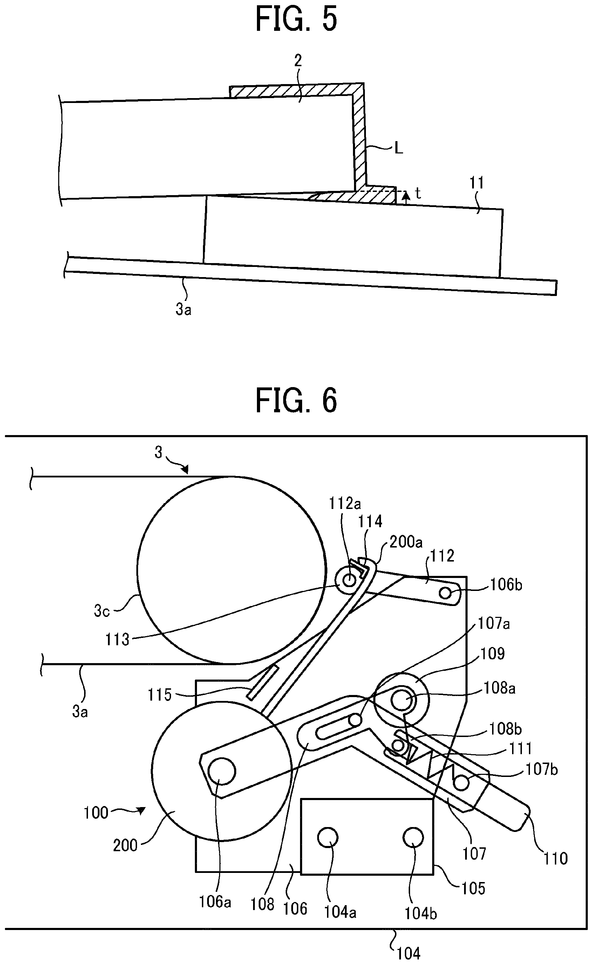

The liquid adherence member 11 is installed on the belt 3a constituting the conveyance mechanism 3 by the tape sticking apparatus 100 (see FIG. 6), which is disposed upstream from the liquid discharge heads 4 and 7 in the conveyance direction in the conveyance mechanism 3. As described above, the liquid adherence member 11 is disposed upstream from the liquid discharge heads 4 and 7 in the conveyance direction in the conveyance mechanism 3, so that the liquid L discharged from the liquid discharge heads 4 and 7 can adhere downstream in the conveyance direction in the conveyance mechanism 3.

Since the liquid adherence member 11 formed of a non-permeable material is disposed so as to cover one end of the conveyance surface of the electrode substrate 2 (position where the liquid L is discharged outside the electrode substrate 2), the liquid L discharged from the liquid discharge heads 4 and 7 to the outside of the electrode substrate 2 adheres to the liquid adherence member 11, so that the liquid L discharged outside the electrode substrate 2 can be prevented from adhering to the conveyance surface of the electrode substrate 2 in the belt 3a constituting the conveyance mechanism 3.

The liquid removing member 12 is disposed in the vicinity of the roller 3b on the downstream side of the conveyance direction of the electrode substrate 2 in the belt 3a constituting the conveyance mechanism 3. The liquid removing member 12 removes the liquid L having been discharged to the liquid adherence member 11 by scraping and sucking the liquid L on the liquid adherence member 11 with a brush, for example.

In the example described above, the tape sticking apparatus 100 is disposed on the upstream side in the conveyance direction of the electrode substrate 2 and the liquid removing member 12 is disposed on the downstream side in the conveyance direction of the electrode substrate 2. However, the tape sticking apparatus 100 may be disposed on the downstream side in the conveyance direction of the electrode substrate 2 and the liquid removing member 12 may be disposed on the upstream side in the conveyance direction of the electrode substrate 2, or each of them may be disposed on the upstream side in the conveyance direction or the downstream side in the conveyance direction of the electrode substrate 2.

As described above, since the liquid L adhered onto the liquid adherence member 11 is removed by the liquid removing member 12 at one side end (a position where the liquid L is discharged outside the electrode substrate 2) of the belt 3a constituting the conveyance mechanism 3 in the direction parallel to the conveying surface of the electrode substrate 2 and orthogonal to the conveyance direction X, it is possible to prevent the liquid L from remaining inside the electrode printing apparatus 1 at least at one side end of the conveying surface, and it is possible to keep clean the inside of the electrode printing apparatus 1.

Next, a positional relationship between the electrode substrate 2 and the liquid adherence member 11 will be described.

FIG. 5 is a diagram illustrating a positional relationship between the electrode substrate 2 and the liquid adherence member 11. Usually, when the gap t between the electrode substrate 2 and the liquid adherence member 11 is small, the liquid L adhering to the liquid adherence member 11 is drawn due to a capillary phenomenon, and the liquid L adhering to the liquid adherence member 11 adheres to the back side of the electrode substrate 2. As described above, if the liquid L adheres to the back side of the electrode substrate 2, the belt 3a constituting the conveyance mechanism 3 and peripheral components will be contaminated.

Therefore, in the present embodiment, among the sides of the surface of the electrode substrate 2 contacting the liquid adherence member, the distance between the liquid adherence member 11 and the uppermost side of the surface of the electrode substrate 2 with respect to the liquid adherence member 11, that is, the longest distance vertically downward from the end of the electrode substrate 2 to the liquid adherence member 11 (the distance of the gap: t in the drawing) is 30 µm or more. Such a configuration can prevent the liquid L adhering to the liquid adherence member 11 due to the capillary phenomenon from reaching the back side of the electrode substrate 2.

Next, a tape sticking apparatus 100 that is a sticking apparatus for sticking the liquid adherence member 11 to the belt 3a will be described.

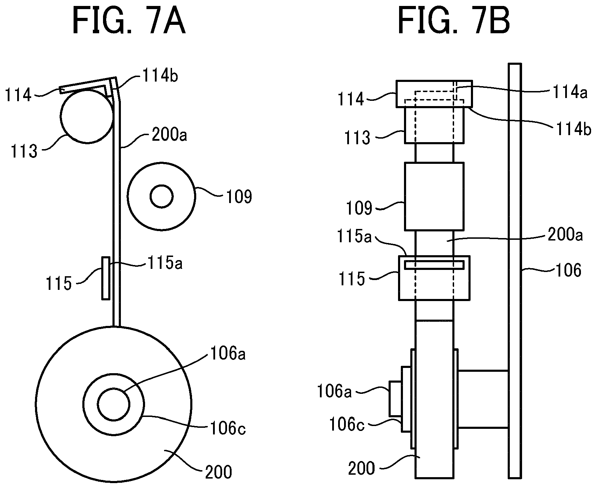

FIG. 6 is a diagram illustrating a configuration of the tape sticking apparatus 100, and FIGS. 7A and 5B are diagrams illustrating the positional relationship among main components of the tape sticking apparatus 100. FIG. 7A is a side view, and FIG. 7B is a front view. As illustrated in FIGS. 6, 7A, and 7B, the tape sticking apparatus 100 holds an adhesive tape roll 200 in which an adhesive tape 200a with at least one adhesive surface is formed into a roll shape.

As illustrated in FIGS. 6, 7A, and 7B, the tape sticking apparatus 100 includes guide shafts 104a and 104b positioned on a structure holding frame 104, a slide base 105 configured to be fixable on the guide shafts 104a and 104b, a base plate 106 fixed to the slide base 105, a tape set shaft 106a serving as a main body of a tape holding member, a set roll arm shaft 106b, and a tape roll stopper 106c.

The tape sticking apparatus 100 is assembled to the base plate 106 fixed to the slide base 105. The tape sticking apparatus 100 is movable in the axial direction of the guide shafts 104a and 104b.

The tape set shaft 106a is smoothly rotatable by a bearing member or the like with a small load resistance in the rotation direction, and has the adhesive tape roll 200 set thereto. The tape roll stopper 106c is a restricting member that restricts the adhesive tape 200a in the axial direction. That is, the tape roll stopper 106c determines the axial edge position of the adhesive tape roll 200 set to the tape set shaft 106a. In this manner, restricting the tape in the axial direction and using the bearing member with a small load resistance in the rotation direction stably maintains the tape posture and fixes the tape position, so that it is possible to prevent occurrence of slack and twisting of the tape and improve the sticking accuracy.

As illustrated in FIGS. 6, 7A, and 7B, the tape sticking apparatus 100 includes a film set arm 107, stand pins 107a and 107b attached to the film set arm 107, a pressing roller arm 108, shafts 108a and 108b integrally formed with the pressing roller arm 108, a pressing roller 109 as a main body of a tape pressing member, a pressing handle 110 assembled to the film set arm 107, and a pressurization unit 111.

The pressing handle 110 is configured to be rotatable about the stand pin 107b attached to the film set arm 107. The pressing handle 110 is configured to engage with the shaft 108b formed integrally with the pressing roller arm 108.

The pressurization unit 111 is disposed between the stand pin 107b which is the rotation center of the pressing handle 110 and the shaft 108b integrally formed with the pressing roller arm 108. The pressurization unit 111 serves as a function of uniquely determining the position of the pressing roller arm 108 with respect to the film set arm 107, and also serves as a function of bringing the pressing roller arm 108 into a pressed state toward the belt 3a constituting the conveyance mechanism 3 by the rotational operation of the pressing handle 110 described later.

As illustrated in FIGS. 6, 7A, and 7B, the tape sticking apparatus 100 also includes a set roll arm 112, a set roll stand 112a disposed on the set roll arm 112, a tape attachment roller 113 rotatably supported on the set roll stand 112a, a tape attachment guide 114 as a main body of the tape attachment member, and a tape rear end sticking plate 115.

The tape attachment roller 113 and the tape attachment guide 114 are disposed on the set roll arm 112 configured to be rotatable about the set roll arm shaft 106b.

The tape attachment guide 114 is disposed close to the tape attachment roller 113 to surround a portion of the outer periphery of the tape attachment roller 113 rotatably supported on the set roll stand 112a on the set roll arm 112.

As illustrated in FIGS. 7A and 7B, the tape attachment guide 114 is provided with a tape edge eye mark 114a at a position in the depth direction of the drawing, which coincides with the edge position of the adhesive tape roll 200 in the axial direction.

As illustrated in FIGS. 7A and 7B, the tape attachment guide 114 is provided with a front end cutting guide 114b that indicates the cutting position of the front end of the adhesive tape 200a and that is orthogonal to the unrolling direction of the adhesive tape 200a. The front end cutting guide 114b is formed of a slit or a groove so as to guide a cutting edge position of a cutter knife or the like.

That is, providing a slit or groove parallel to the tape width direction in the tape attachment guide 114 serving as the tape sticking surface allows the front end of the adhesive tape 200a to be cut straight, so that the sticking quality of the cut portion can be stabilized. In addition, work safety can be improved.

The tape rear end sticking plate 115 is disposed close to the belt 3a in the middle of the path of the adhesive tape 200a connecting the tape set shaft 106a and the tape attachment guide 114, in a positional relationship in which the tape rear end sticking plate 115 is not in contact with the belt 3a. As illustrated in FIG. 7, on the surface of the tape rear end sticking plate 115, a rear end cutting guide 115a formed of a slit or a groove is disposed orthogonal to the unrolling direction of the adhesive tape 200a so as to guide a front end position of a cutter knife or the like, similarly to the front end cutting guide 114b. Providing the tape rear end sticking plate 115 facilitates the cutting operation of the rear end of the adhesive tape 200a. In addition, providing a slit or a groove parallel to the tape width direction on the tape-side surface of the tape rear end sticking plate 115 allows the rear end of the adhesive tape 200a to be cut straight, so that the sticking quality of the cut portion can be stabilized. In addition, work safety can be improved.

First, the tape front end restraining process in the tape sticking apparatus 100 having such a configuration will be described.

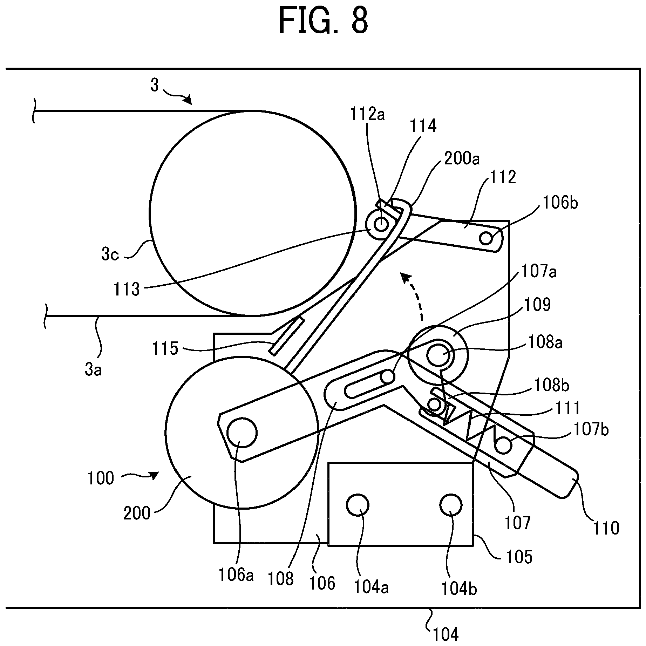

FIG. 8 is a diagram illustrating the tape front end restraining process.

First, as illustrated in FIG. 8, the operator unrolls the adhesive tape roll 200 set on the tape set shaft 106a at an axial edge position, toward the belt 3a constituting the conveyance mechanism 3. Next, the operator presses the front end of the unrolled adhesive tape 200a against the tape attachment roller 113 and the tape attachment guide 114 from the non-adhesive side to stick the adhesive tape. Since tension due to the peeling force at the time of unwinding from the roll acts on the adhesive tape 200a, the operator can attach the unrolled adhesive tape 200a to the tape attachment roller 113 and the tape attachment guide 114 in a tense state without slack.

The operator also sticks the front end of the adhesive tape 200a with reference to the tape edge eye mark 114a (see FIG. 7) indicating a position corresponding to the edge position of the adhesive tape 200a in the width direction. Accordingly, the operator can prevent the positional shift of the adhesive tape 200a and effect straight positioning of the adhesive tape 200a without twisting from the adhesive tape roll 200 to restrain the front end of the adhesive tape 200a, so that the sticking accuracy can be improved.

The operator can move the slide base 105 on the guide shafts 104a and 104b to stick the adhesive tape 200a to a given position on the belt 3a constituting the conveyance mechanism 3. That is, regardless of the width size of the electrode substrate 2, the operator can adjust the relative positions of the edge of the electrode substrate 2 and the adhesive tape 200a.

Next, a tape front end cutoff process in the tape sticking apparatus 100 will be described.

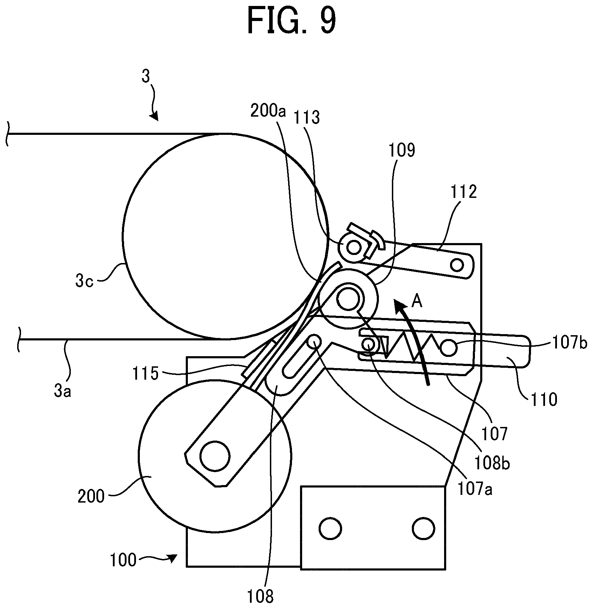

FIG. 9 is a diagram illustrating the tape leading end cutoff process.

The operator cuts off the front end of the adhesive tape 200a that was positioned by restraining the front end in the tape front end restraining process illustrated in FIG. 8 and may hinder the adhesiveness due to adhesion of hand oil or the like of the operator.

The adhesive tape 200a is frequently a thin film made of a material that easily stretches. In the case of cutting the tape by pressing the blade of a cutter knife or the like, the cutting position may not be fixed due to stretching of the adhesive tape 200a, which makes it difficult to cut the tape straight. In addition, if the cut surface of the adhesive tape 200a is bent, a portion of the adhesive tape 200a may be unlikely to be in close contact with the sticking substrate surface (the tape attachment roller 113 and the tape attachment guide 114), which causes uplift of the tape after sticking. In the case of cutting and piercing through the film, the blade is largely exposed, which is a disadvantage in terms of work safety.

Therefore, in the present embodiment, the adhesive tape 200a is stuck onto the tape attachment guide 114 to eliminate the stretching of the adhesive tape 200a, and the cutting position is defined by guiding the moving line of the blade with the front end cutting guide 114b, so that the sticking quality of the cut portion and the safety operation can be achieved.

Specifically, as illustrated in FIG. 9, after cutting the front end of the adhesive tape 200a with a cutter knife or the like along the front end cutting guide 114b, the operator rotates the pressing handle 110 assembled to the film set arm 107 in the counterclockwise direction (arrow direction A) in the drawing. Then, along with the rotation of the pressing handle 110, the pressing roller 109 rotates together with the pressing roller arm 108. In this way, the operator can press and stick the adhesive tape 200a with the front end restrained in the tension state described with reference to FIG. 8 against the surface of the belt 3a constituting the conveyance mechanism 3.

As illustrated in FIG. 7, the pressing roller 109 is configured to cover the entire width of the adhesive tape 200a in order to evenly press the adhesive tape 200a.

The operator continues the pressing operation of the pressing handle 110. The increase in the path length of the adhesive tape 200a by the pressing operation of the pressing handle 110 increases the tension of the adhesive tape 200a. Since the tape attachment roller 113 rotates toward the pressing roller 109 (clockwise in the drawing) by the operator performing the pressing operation of the pressing handle 110, the adhesive tape 200a stuck on the tape attachment roller 113 is cut off from the cut surface.

As described above, since the adhesive tape 200a can maintain the tension state in the tape front end cutoff process, it is possible to remove the front end to which foreign matter hindering the adhesiveness such as hand oil may adhere by contact with human hands in the restraining process of the front end of the adhesive tape 200a described in FIG. 8 without positional shift.

Next, a tape front end pressure-sticking process in the tape sticking apparatus 100 will be described.

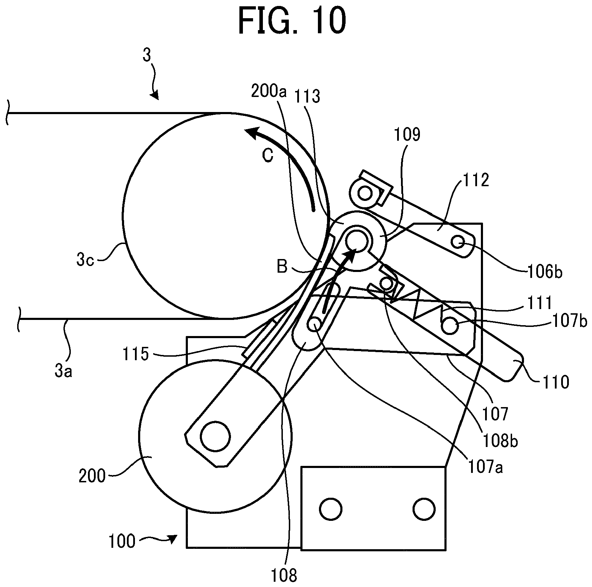

FIG. 10 is a diagram illustrating a tape front end pressure-sticking process.

Described herein are a process of spreading and sticking the adhesive tape 200a having been stuck to the surface of the tape attachment roller 113 in the tape front end cutout process of FIG. 9 to the surface of the belt 3a constituting the conveyance mechanism 3, and a process of pressing and sticking the adhesive tape 200a to the surface of the belt 3a.

When the operator rotates the pressing handle 110 clockwise about the stand pin 107b from the state illustrated in FIG. 9, the pressing roller arm 108 moves in the arrow direction B in FIG. 9 together with the pressing roller 109. At this time, the film set arm 107 is fixed at the position illustrated in FIG. 9 by a latch mechanism.

Since the film set arm 107 maintains the posture illustrated in FIG. 9, the pressurization unit 111 presses the pressing roller arm 108 against the belt 3a, so that the pressing roller 109 rolls from above the adhesive tape 200a while pressing the surface of the belt 3a. At this time, since the tape attachment roller 113 and the tape attachment guide 114 used for restraining the front end of the adhesive tape 200a in the processes described with reference to FIGS. 8 and 9 are disposed in the set roll arm 112 configured to be rotatable about the set roll arm shaft 106b, the tape attachment roller 113 and the tape attachment guide 114 retract without hindering the movement of the pressing roller 109.

The operator can stick the adhesive tape 200a to the surface of the belt 3a by relatively moving the tape sticking apparatus 100 and the belt 3a constituting the conveyance mechanism 3 while maintaining the posture illustrated in FIG. 10.

For example, by rotating the belt 3a in the counterclockwise direction (the arrow direction C of the roller 3c on the upstream side in the conveyance direction of the electrode substrate 2 in the belt 3a constituting the conveyance mechanism 3 in FIG. 10), the adhesive tape 200a is stuck to the entire circumference of the surface of the belt 3a while being unwound from the adhesive tape roll 200 according to the movement of the belt 3a.

The adhesive tape 200a is stuck while being pressurized by the pressing roller 109 under the action of tension due to peeling force generated when the adhesive tape is unwound from the adhesive tape roll 200, so that the adhesive tape 200a can be stuck without positional shift due to meandering or the like with respect to the conveyance direction of the belt 3a or lifting from the surface of the belt 3a.

Since the pressing roller 109 can maintain the pressed state in this manner, the adhesive tape 200a can be stuck to the surface of the belt 3a to a given position while being wound around the adhesive tape roll 200 according to the relative movement with respect to the belt 3a constituting the conveyance mechanism 3. As a result, it is possible to stick the adhesive tape 200a by an arbitrary length depending on the relative movement amount.

The pressing roller 109 that is a rotating roller used as the tape pressing member can move in an arc around the adhesive tape 200a, and after contact with the surface of the belt 3a, the pressing roller 109 can be moved so as to be pushed up along the surface of the belt 3a. Accordingly, the front end of the adhesive tape 200a stuck to the surface of the tape attachment roller 113 can be spread and stuck to the surface of the belt 3a.

In the present embodiment, the tape path exists within the movable range of the pressing roller 109. This makes it possible to cut off the adhesive tape 200a stuck on the tape attachment roller 113 from the cut side without shifting the tape position, and remove the front end having a possibility of adhesion of foreign matter, such as hand oil, which has contacted the hand in the process of restraining the front end of the adhesive tape 200a.

Next, processing of the tape rear end at the time of sticking the adhesive tape 200a to the belt 3a around the entire circumference will be described.

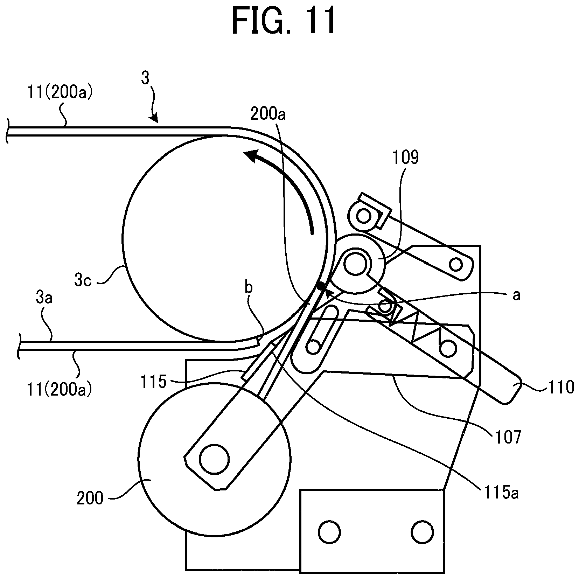

FIG. 11 is a diagram illustrating a position of the tape rear end at the time of sticking the tape around the entire circumference.

The position indicated by "a" in FIG. 11 is a contact point between the adhesive tape 200a unrolled from the adhesive tape roll 200 and the belt 3a constituting the conveyance mechanism 3. The position indicated by "b" in FIG. 11 is a front end position of the adhesive tape 200a where the front end stuck first circulates and returns.

Next, a tape rear end cutting process in the tape sticking apparatus 100 will be described.

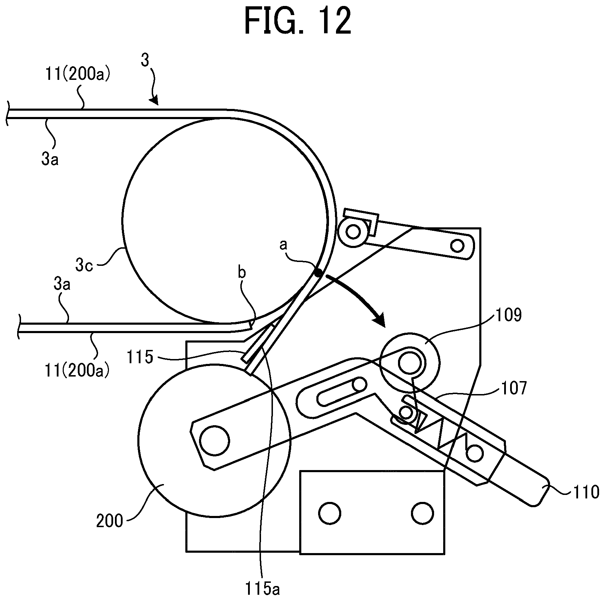

FIG. 12 is a diagram illustrating the tape rear end cutting process.

The operator stops the movement of the belt 3a constituting the conveyance mechanism 3 at a position where the relationship between the distance from the rear end cutting guide 115a to a point a and the distance from the point a to a point b is as follows:
Distance from the rear end cutting guide 115a to the point a ≥ distance from the point a to the point b
Then, as illustrated in FIG. 12, the operator rotates the pressing handle 110 in the direction opposite to the arrow B in FIG. 10, releases and opens the latch of the film set arm 107, and releases the pressing roller 109 from the pressed state.

Then, the operator presses and sticks the adhesive tape 200a unrolled out from the adhesive tape roll 200 to the tape rear end sticking plate 115.

Then, the operator cuts the adhesive tape 200a at the position of the adhesive tape rear end cutting guide 115a.

Next, a tape joint sticking process in the tape sticking apparatus 100 will be described.

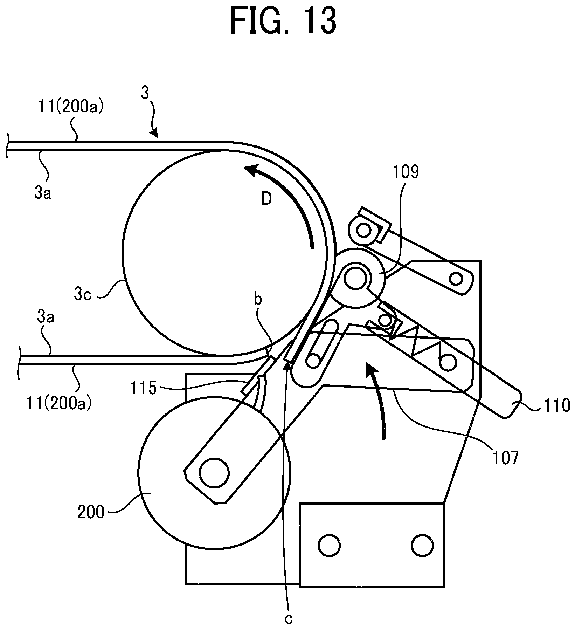

FIG. 13 is a diagram illustrating the tape joint sticking process.

As illustrated in FIG. 13, the operator closes and latches the film set arm 107, and simultaneously brings the pressing roller 109 into a pressed state.

Then, the operator rotationally moves the belt 3a constituting the conveyance mechanism 3 in an arrow direction D illustrated in FIG. 13. With this rotational movement, a rear end cutting point c of the adhesive tape 200a is cut off according to the movement of the belt 3a constituting the conveyance mechanism 3. Then, the rear end cutting point c of the adhesive tape 200a is pressed at the nip point of the pressing roller 109 and overlaps and sticks to a point b of the front end of the circulating tape.

By the following process, since the rear end of the adhesive tape 200a overlaps the front end of the adhesive tape 200a that was first stuck and is pressed and stuck together by the pressing roller 109, the adhesive tape 200a can be stuck to the entire circumference of the belt 3a constituting the conveyance mechanism 3 to form the liquid adherence member 11.

In the present embodiment, the front end of the adhesive tape 200a is wound around the point b, which is the front end position at which the first stuck front end of the adhesive tape 200a is wound around and returned. However, the present invention is not limited to this, and the sticking length of the adhesive tape 200a can be changed by performing the same process not only at the front end of the adhesive tape 200a but also at a given position.

In this way, according to the present embodiment, at the time of the borderless printing, the liquid L discharged onto the electrode substrate 2 is caused to adhere to the liquid adherence member 11 and then the liquid L on the liquid adherence member 11 is removed by the liquid removing member 12. Thus, the printing can be performed without attaching the liquid L to the belt 3a constituting the conveyance mechanism 3 at the time of borderless printing.

In addition, according to the present embodiment, the front end of the adhesive tape 200a is restrained and positioned, the adhesive tape 200a restrained in the tensioned state is pressed and stuck to the belt 3a, a portion of the first stuck front end of the adhesive tape 200a with a high possibility of being stained with hand oil or the like is cut off, and then the front end of the adhesive tape 200a is pressed and stuck. Therefore, it is possible to stick the adhesive tape 200a in a highly accurate and reliable manner with a simple structure and a small-sized configuration. That is, according to the present embodiment, it is possible to accurately install the liquid adherence member 11 used for printing without adhering the liquid to the conveyance surface at the time of borderless printing with a small and simple device.

The control device of the electrode printing apparatus 1 may control the liquid discharge heads 4 and 7 so as not to discharge the liquid L to a region where the liquid adherence member 11 is not disposed on the conveyance surface of the electrode substrate 2 in the belt 3a constituting the conveyance mechanism 3. In this way, since the liquid L does not protrude from the liquid adherence member 11, the conveyance surface of the conveyance mechanism 3 and the electrode printing apparatus 1 are not contaminated.

In the present embodiment, the ink (liquid L) is discharged from the liquid discharge heads 4 and 7 to form the ink layer or the active material layer on the electrode substrate 2. However, the present invention is not limited thereto. The liquid L containing an insulating material may be discharged from the liquid discharge head to form an insulating layer.

### Second Embodiment

Next, a second embodiment will be described.

The second embodiment is different from the first embodiment in that a liquid adherence member 11 is disposed so as to cover both ends (positions at which a liquid L is discharged to the outside of an electrode substrate 2) of a belt 3a constituting a conveyance mechanism 3 in a direction parallel to the conveying surface of the electrode substrate 2 and orthogonal to a conveyance direction X. Hereinafter, in relation to the second embodiment, description of the components identical to those in the first embodiment will be omitted, and the components different from those in the first embodiment will be described.

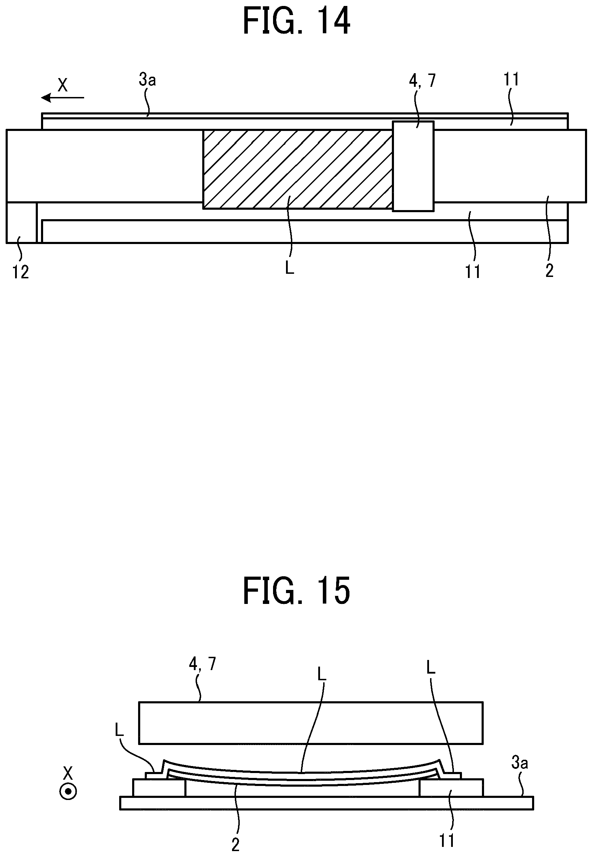

FIG. 14 is a plan view of an ink removing mechanism disposed in the electrode printing apparatus 1 according to the second embodiment, and FIG. 15 is a front view of a cross section of the ink removing mechanism disposed in the electrode printing apparatus 1 as seen from the downstream side in the conveyance direction.

As illustrated in FIGS. 14 and 15, the liquid adherence member 11 is disposed so as to cover both ends (positions at which the liquid L is discharged to the outside of the electrode substrate 2) of the belt 3a constituting the conveyance mechanism 3 in a direction parallel to the conveyance surface of the electrode substrate 2 and orthogonal to the conveyance direction X. Therefore, a portion of the liquid adherence member 11 is held between the end of the electrode substrate 2 and the belt 3a constituting the conveyance mechanism 3. As a result, on condition that the electrode substrate 2 has flexibility, the electrode substrate 2 is inclined at both ends in the direction orthogonal to the conveyance direction X with respect to the conveyance surface of the belt 3a on which to convey the electrode substrate 2.

Since the liquid adherence member 11 formed of a non-permeable material is disposed so as to cover both ends of the conveyance surface of the electrode substrate 2 (position where the liquid L is discharged outside the electrode substrate 2), the liquid L discharged from liquid discharge heads 4 and 7 to the outside of the electrode substrate 2 adheres to the liquid adherence member 11, so that the liquid L discharged outside the electrode substrate 2 can be prevented from adhering to the conveyance surface of the electrode substrate 2 in the belt 3a constituting the conveyance mechanism 3.

Also in the present embodiment, among the sides of the surface of the electrode substrate 2 in contact with the liquid adherence member, the distance between the uppermost side with respect to the liquid adherence member 11 and the liquid adherence member 11, that is, the longest distance vertically downward from the end of the electrode substrate 2 to the liquid adherence member 11 (the distance of the gap) is 30 µm or more. With such a configuration, it is possible to prevent the liquid L adhering to the liquid adherence member 11 due to the capillary phenomenon from reaching the back side of the electrode substrate 2.

### Third Embodiment

Next, a third embodiment will be described.

The third embodiment is different from the first embodiment and the second embodiment in that the third embodiment is an electrode forming apparatus including an electrode printing apparatus 1. Hereinafter, in relation to the third embodiment, description of the components identical to those in the first and second embodiments will be omitted, and the components different from those in the first and second embodiments will be described.

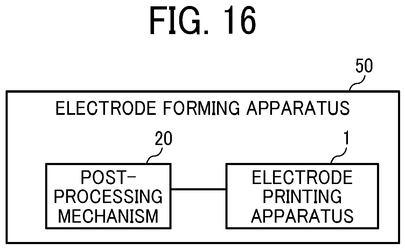

FIG. 16 is a diagram schematically illustrating an electrode forming apparatus 50 according to the third embodiment. As illustrated in FIG. 16, the electrode forming apparatus 50 includes a post-processing mechanism 20 such as a press roll as a unit for pressing the obtained thin film electrode, or a cutting mechanism such as a slit blade or a laser for cutting the thin film electrode, in a subsequent stage of the electrode printing apparatus 1.

The above-described embodiments and examples are limited examples, and the present invention includes, for example, the following aspects.

Some embodiments and examples of the present invention have been described above. However, the present invention is not limited to these specific embodiments and examples, and various modifications and changes can be made within the scope of the appended claims. For example, technical matters described in the above embodiments, examples, and the like may be appropriately combined, within the scope of the appended claims.

For example, in the above examples, the thin film electrode exhibiting the above advantageous effects of the present invention is applied to a lithium ion secondary battery. However, the present invention is not limited thereto, and the present invention can apply to or apply mutatis mutandis to a secondary battery which is the above-described power storage device, a power generation device such as a fuel cell, or the like.

The advantageous effects described in relation to the embodiments of the present invention are merely listed as most preferable advantageous effects derived from the present invention. Therefore, the advantageous effects of the present invention are not limited to those described in relation to the embodiments of the present invention.

## Claims

1. An electrode forming apparatus (50) comprising a liquid discharge apparatus (1), the liquid discharge apparatus (1) comprising:
a conveyor (3) to convey a substrate (2), wherein the substrate is an electrode substrate;
a liquid adherence member (11) disposed on the conveyor (3) and partially held between the conveyor (3) and an end of the substrate (2); and
a discharger (4, 7) to discharge a liquid composition to the substrate (2) and the liquid adherence member (11),
wherein, when the substrate (2) is conveyed by the conveyor (3), a portion of the liquid adherence member (11) is held between an end of the substrate (2) and the conveyor (3), such that the substrate is inclined with respect to a conveyance surface of the conveyor (3) on which to convey the substrate (2).

2. A multilayer separator forming apparatus, comprising a liquid discharge apparatus (1), the liquid discharge apparatus (1) comprising:
a conveyor (3) to convey a substrate (2), wherein the substrate is a separator or a different layer of the multilayer separator;
a liquid adherence member (11) disposed on the conveyor (3) and partially held between the conveyor (3) and an end of the substrate (2); and
a discharger (4, 7) to discharge a liquid composition to the substrate (2) and the liquid adherence member (11),
wherein, when the substrate (2) is conveyed by the conveyor (3), a portion of the liquid adherence member (11) is held between an end of the substrate (2) and the conveyor (3), such that the substrate is inclined with respect to a conveyance surface of the conveyor (3) on which to convey the substrate (2).

3. The electrode forming apparatus (50) according to claim 1 or the multilayer separator forming apparatus according to claim 2, wherein the liquid discharge apparatus (1) further comprises a removing unit (12) to remove the liquid composition discharged to the liquid adherence member (11).

4. The electrode forming apparatus (50) or the multilayer separator forming apparatus according to any preceding claim,
wherein the discharger (4, 7) does not discharge the liquid composition to a region where the liquid adherence member (11) is not disposed on the conveyor (3).

5. The electrode forming apparatus (50) or the multilayer separator forming apparatus according to any preceding claim,
wherein the liquid adherence member (11) is made of a non-permeable material.

6. The electrode forming apparatus (50) or the multilayer separator forming apparatus according to any preceding claim,
wherein a distance between the liquid adherence member (11) and one side of a surface of the substrate is 30 µm or more, the surface of the substrate contacting the liquid adherence member (11), the one side being at an uppermost position, among a plurality of sides of the surface of the substrate, with respect to the liquid adherence member (11).

7. The electrode forming apparatus (50) or the multilayer separator forming apparatus according to any preceding claim,
wherein the discharger (4, 7) discharges the liquid composition beyond an end of the substrate in a width direction orthogonal to a conveyance direction in which the conveyor conveys the substrate.

8. The electrode forming apparatus (50) or the multilayer separator forming apparatus according to any preceding claim, the liquid discharge apparatus (1) further comprising a sticking apparatus (100) disposed upstream from the discharger (4, 7) in a conveyance direction of the conveyor (3).

9. The electrode forming apparatus (50) or the multilayer separator forming apparatus according to claim 7,
wherein the sticking apparatus includes:
a tape holding member (106a, 106b, 106c) to hold a tape (200a);
a tape attachment member (114) to position and stick an end of the tape held by the tape holding member (106a, 106b, 106c); and
a tape pressing member (109) to operate to peel off the tape, the tape being stuck to the tape attachment member and restrained in a tense state, from the tape attachment member and press and stick the tape to the conveyance surface of the conveyor.

10. The electrode forming apparatus (50) or the multilayer separator forming apparatus according to any preceding claim,
wherein the discharger (4, 7) includes a liquid discharge head (7) to discharge the liquid composition.

11. The electrode forming apparatus (50) or the multilayer separator forming apparatus according to any preceding claim,
wherein the liquid adherence member (11) is disposed at one side end of the conveyor (3) in a direction parallel to the conveyance surface of the conveyor and orthogonal to a conveyance direction of the conveyor.

12. The electrode forming apparatus (50) or the multilayer separator forming apparatus according to any preceding claim,
wherein the liquid adherence member (11) is disposed at both side ends of the conveyor (3) in a direction parallel to the conveyance surface of the conveyor and orthogonal to a conveyance direction of the conveyor.

13. The electrode forming apparatus (50) or the multilayer separator forming apparatus according to any preceding claim,
further comprising the liquid composition, wherein the discharger (4, 7) discharges the liquid composition containing an insulating material.

14. The electrode forming apparatus (50) or the multilayer separator forming apparatus according to any preceding claim,
wherein the conveyor (3) includes a belt to convey the substrate.

## Patentansprüche

1. Elektrodenausbildende Einrichtung (50), die eine Flüssigkeitsausstoßeinrichtung (1) umfasst, wobei die Flüssigkeitsausstoßeinrichtung (1) umfasst:
einen Förderer (3) zum Fördern eines Substrats (2), wobei das Substrat ein Elektrodensubstrat ist;
ein Flüssigkeitsanhaftungselement (11), das auf dem Förderer (3) angeordnet ist und teilweise zwischen dem Förderer (3) und einem Ende des Substrats (2) gehalten wird; und
eine Ausstoßvorrichtung (4, 7) zum Ausstoßen einer flüssigen Zusammensetzung auf das Substrat (2) und das Flüssigkeitsanhaftungselement (11),
wobei, wenn das Substrat (2) durch den Förderer (3) gefördert wird, ein Abschnitt des Flüssigkeitsanhaftungselements (11) zwischen einem Ende des Substrats (2) und dem Förderer (3) gehalten wird, sodass das Substrat in Bezug auf eine Förderoberfläche des Förderers (3), auf der das Substrat (2) gefördert wird, geneigt ist.

2. Mehrschichtseparatorausbildende Vorrichtung, die eine Flüssigkeitsausstoßeinrichtung (1) umfasst, wobei die Flüssigkeitsausstoßeinrichtung (1) umfasst:
einen Förderer (3) zum Fördern eines Substrats (2), wobei das Substrat ein Separator oder eine unterschiedliche Schicht des Mehrschichtseparators ist;
ein Flüssigkeitsanhaftungselement (11), das auf dem Förderer (3) angeordnet ist und teilweise zwischen dem Förderer (3) und einem Ende des Substrats (2) gehalten wird; und
eine Ausstoßvorrichtung (4, 7) zum Ausstoßen einer flüssigen Zusammensetzung auf das Substrat (2) und das Flüssigkeitsanhaftungselement (11),
wobei, wenn das Substrat (2) durch den Förderer (3) gefördert wird, ein Abschnitt des Flüssigkeitsanhaftungselements (11) zwischen einem Ende des Substrats (2) und dem Förderer (3) gehalten wird, sodass das Substrat in Bezug auf eine Förderoberfläche des Förderers (3), auf der das Substrat (2) gefördert wird, geneigt ist.

3. Elektrodenausbildende Einrichtung (50) nach Anspruch 1 oder mehrschichtseparatorausbildende Vorrichtung nach Anspruch 2, wobei die Flüssigkeitsausstoßeinrichtung (1) ferner eine Entfernungseinheit (12) umfasst, um die Flüssigkeitszusammensetzung zu entfernen, die auf das Flüssigkeitsanhaftungselement (11) ausgestoßen wird.

4. Elektrodenausbildende Einrichtung (50) oder mehrschichtseparatorausbildende Vorrichtung nach einem der vorhergehenden Ansprüche,
wobei die Ausstoßvorrichtung (4, 7) die flüssige Zusammensetzung nicht in einen Bereich ausstößt, in dem das Flüssigkeitsanhaftungselement (11) nicht auf dem Förderer (3) angeordnet ist.

5. Elektrodenausbildende Einrichtung (50) oder mehrschichtseparatorausbildende Vorrichtung nach einem der vorhergehenden Ansprüche,
wobei das Flüssigkeitsanhaftungselement (11) aus einem nicht-durchlässigen Material hergestellt ist.

6. Elektrodenausbildende Einrichtung (50) oder mehrschichtseparatorausbildende Vorrichtung nach einem der vorhergehenden Ansprüche,
wobei ein Abstand zwischen dem Flüssigkeitsanhaftungselement (11) und einer Seite einer Oberfläche des Substrats 30 µm oder mehr beträgt, wobei die Oberfläche des Substrats das Flüssigkeitsanhaftungselement (11) berührt, wobei sich die eine Seite an einer obersten Position unter einer Mehrzahl von Seiten der Oberfläche des Substrats in Bezug auf das Flüssigkeitsanhaftungselement (11) befindet.

7. Elektrodenausbildende Einrichtung (50) oder mehrschichtseparatorausbildende Vorrichtung nach einem der vorhergehenden Ansprüche,
wobei die Ausstoßvorrichtung (4, 7) die flüssige Zusammensetzung über ein Ende des Substrats hinaus in einer Breitenrichtung senkrecht zu einer Förderrichtung ausstößt, in der der Förderer das Substrat fördert.

8. Elektrodenausbildende Einrichtung (50) oder mehrschichtseparatorausbildende Vorrichtung nach einem der vorhergehenden Ansprüche, wobei die Flüssigkeitsausstoßeinrichtung (1) ferner eine Klebeeinrichtung (100) umfasst, die stromaufwärts der Ausstoßvorrichtung (4, 7) in einer Förderrichtung des Förderers (3) angeordnet ist.

9. Elektrodenausbildende Einrichtung (50) oder mehrschichtseparatorausbildende Vorrichtung nach Anspruch 7,
wobei die Klebeeinrichtung beinhaltet:
ein Bandhalteelement (106a, 106b, 106c), um ein Band (200a) zu halten;
ein Bandbefestigungselement (114) zum Positionieren und Kleben eines Endes des von dem Bandhalteelement (106a, 106b, 106c) gehaltenen Bandes; und
ein Banddruckelement (109) zum Betreiben, um das Band von dem Bandbefestigungselement abzuziehen, wobei das Band an dem Bandbefestigungselement klebt und von dem Bandbefestigungselement in einem gespannten Zustand gehalten wird, und zum Drücken und Kleben des Bands an die Förderoberfläche des Förderers.

10. Elektrodenausbildende Einrichtung (50) oder mehrschichtseparatorausbildende Vorrichtung nach einem der vorhergehenden Ansprüche,
wobei die Ausstoßvorrichtung (4, 7) einen Flüssigkeitsausstoßkopf (7) zum Ausstoßen der flüssigen Zusammensetzung beinhaltet.

11. Elektrodenausbildende Einrichtung (50) oder mehrschichtseparatorausbildende Vorrichtung nach einem der vorhergehenden Ansprüche,
wobei das Flüssigkeitsanhaftungselement (11) an einem Seitenende des Förderers (3) in einer Richtung parallel zu der Förderoberfläche des Förderers und senkrecht zu einer Förderrichtung des Förderers angeordnet ist.

12. Elektrodenausbildende Einrichtung (50) oder mehrschichtseparatorausbildende Vorrichtung nach einem der vorhergehenden Ansprüche,
wobei das Flüssigkeitshaftungselement (11) an beiden Seitenenden des Förderers (3) in einer Richtung parallel zu der Förderoberfläche des Förderers und senkrecht zu einer Förderrichtung des Förderers angeordnet ist.

13. Elektrodenausbildende Einrichtung (50) oder mehrschichtseparatorausbildende Vorrichtung nach einem der vorhergehenden Ansprüche,
ferner umfassend die flüssige Zusammensetzung, wobei die Ausstoßvorrichtung (4, 7) die flüssige Zusammensetzung, die ein isolierendes Material enthält, ausstößt.

14. Elektrodenausbildende Einrichtung (50) oder mehrschichtseparatorausbildende Vorrichtung nach einem der vorhergehenden Ansprüche,
wobei der Förderer (3) ein Band zum Fördern des Substrats beinhaltet.

## Revendications

1. Appareil de formation d'électrodes (50) comprenant un appareil de décharge de liquide (1), l'appareil de décharge de liquide (1) comprenant :
un convoyeur (3) pour transporter un substrat (2), le substrat étant un substrat d'électrode ;
un élément d'adhérence de liquide (11) disposé sur le convoyeur (3) et partiellement maintenu entre le convoyeur (3) et une extrémité du substrat (2) ; et
un élément de décharge (4, 7) pour décharger une composition liquide vers le substrat (2) et l'élément d'adhérence de liquide (11),
dans lequel, lorsque le substrat (2) est transporté par le convoyeur (3), une partie de l'élément d'adhérence de liquide (11) est maintenue entre une extrémité du substrat (2) et le convoyeur (3), de telle sorte que le substrat est incliné par rapport à une surface de transport du convoyeur (3) sur laquelle le substrat (2) est transporté.

2. Appareil de formation de séparateur multicouche, comprenant un appareil de décharge de liquide (1), l'appareil de décharge de liquide (1) comprenant :
un convoyeur (3) pour transporter un substrat (2), le substrat étant un séparateur ou une couche différente du séparateur multicouche ;
un élément d'adhérence de liquide (11) disposé sur le convoyeur (3) et partiellement maintenu entre le convoyeur (3) et une extrémité du substrat (2) ; et
un élément de décharge (4, 7) pour décharger une composition liquide vers le substrat (2) et l'élément d'adhérence de liquide (11),
dans lequel, lorsque le substrat (2) est transporté par le convoyeur (3), une partie de l'élément d'adhérence de liquide (11) est maintenue entre une extrémité du substrat (2) et le convoyeur (3), de telle sorte que le substrat est incliné par rapport à une surface de transport du convoyeur (3) sur laquelle le substrat (2) est transporté.

3. Appareil de formation d'électrodes (50) selon la revendication 1 ou appareil de formation de séparateur multicouche selon la revendication 2, dans lequel l'appareil de décharge de liquide (1) comprend en outre une unité de retrait (12) pour éliminer la composition liquide déchargée vers l'élément d'adhérence de liquide (11).

4. Appareil de formation d'électrodes (50) ou appareil de formation de séparateur multicouche selon l'une quelconque des revendications précédentes,
dans lequel l'élément de décharge (4, 7) ne décharge pas la composition liquide vers une région où l'élément d'adhérence de liquide (11) n'est pas disposé sur le convoyeur (3).

5. Appareil de formation d'électrodes (50) ou appareil de formation de séparateur multicouche selon l'une quelconque des revendications précédentes,
dans lequel l'élément d'adhérence de liquide (11) est constitué d'un matériau non perméable.

6. Appareil de formation d'électrodes (50) ou appareil de formation de séparateur multicouche selon l'une quelconque des revendications précédentes,
dans lequel une distance entre l'élément d'adhérence de liquide (11) et un côté d'une surface du substrat est de 30 µm ou plus, la surface du substrat étant en contact avec l'élément d'adhérence de liquide (11), le côté étant dans une position la plus haute, parmi une pluralité de côtés de la surface du substrat, par rapport à l'élément d'adhérence de liquide (11).

7. Appareil de formation d'électrodes (50) ou appareil de formation de séparateur multicouche selon l'une quelconque des revendications précédentes,
dans lequel l'élément de décharge (4, 7) décharge la composition liquide au-delà d'une extrémité du substrat dans une direction de largeur orthogonale à une direction de transport dans laquelle le convoyeur transporte le substrat.

8. Appareil de formation d'électrodes (50) ou appareil de formation de séparateur multicouche selon l'une quelconque des revendications précédentes, l'appareil de décharge de liquide (1) comprenant en outre un appareil de collage (100) disposé en amont de l'élément de décharge (4, 7) dans une direction de transport du convoyeur (3).

9. Appareil de formation d'électrodes (50) ou appareil de formation de séparateur multicouche selon la revendication 7,
dans lequel l'appareil de collage comprend :
un élément de maintien de bande (106a, 106b, 106c) pour maintenir une bande (200a) ;
un élément de fixation de bande (114) pour positionner et coller une extrémité de la bande maintenue par l'élément de maintien de bande (106a, 106b, 106c) ; et
un élément de pression de bande (109) destiné à décoller la bande, la bande étant collée à l'élément de fixation de bande et retenue dans un état tendu, à partir de l'élément de fixation de bande et à presser et coller la bande sur la surface de transport du convoyeur.

10. Appareil de formation d'électrodes (50) ou appareil de formation de séparateur multicouche selon l'une quelconque des revendications précédentes,
dans lequel l'élément de décharge (4, 7) comprend une tête de décharge de liquide (7) pour décharger la composition liquide.

11. Appareil de formation d'électrodes (50) ou appareil de formation de séparateur multicouche selon l'une quelconque des revendications précédentes,
dans lequel l'élément d'adhérence de liquide (11) est disposé à une extrémité latérale du convoyeur (3) dans une direction parallèle à la surface de transport du convoyeur et orthogonale à une direction de transport du convoyeur.

12. Appareil de formation d'électrodes (50) ou appareil de formation de séparateur multicouche selon l'une quelconque des revendications précédentes,
dans lequel l'élément d'adhérence de liquide (11) est disposé aux deux extrémités latérales du convoyeur (3) dans une direction parallèle à la surface de transport du convoyeur et orthogonale à une direction de transport du convoyeur.

13. Appareil de formation d'électrodes (50) ou appareil de formation de séparateur multicouche selon l'une quelconque des revendications précédentes,
comprenant en outre la composition liquide, l'élément de décharge (4, 7) déchargeant la composition liquide contenant un matériau isolant.

14. Appareil de formation d'électrodes (50) ou appareil de formation de séparateur multicouche selon l'une quelconque des revendications précédentes,
dans lequel le convoyeur (3) comprend une courroie pour transporter le substrat.
